# FASCICULE DE BREVET EUROPEEN

(11) **EP 1 928 768 B1**
(45) Date de publication et mention de la délivrance du brevet: **07.10.2009**
(21) Numéro de dépôt: 06794307.6
(22) Date de dépôt: 08.08.2006
(51) Int. Cl.: B65G 51/03

(54) **CONVOYEUR OU TRANSPORTEUR A AIR**
PNEUMATISCHER FÖRDERER
PNEUMATIC CONVEYOR

(30) Priorité: 02.09.2005 FR 0508985
(43) Date de publication de la demande: 11.06.2008
(73) Titulaire: Sidel Participations S.A.S., 76930 Octeville sur Mer (FR)
(72) Inventeur: CANTISANI, Nicolas, F-76930 Octeville sur Mer (FR); PETROVIC, Zmaj, F-76930 Octeville Sur Mer (FR)
(74) Mandataire: Nuss, Pierre
(86) Numéro de dépôt international: PCT/FR2006/001923
(87) Numéro de publication internationale: WO 2007/028869

(56) Documents cités:
- US-A- 5 630 679
- US-A1- 2004 084 285

## Description

La présente invention concerne le domaine du convoyage de charges au moyen de convoyeurs ou transporteurs aériens à air et a pour objet un tel convoyeur ou transporteur à air, selon le préambule de la revendication 1.

Les convoyeurs ou transporteurs aériens à air sont généralement destinés à l'acheminement de produits relativement légers, guidés dans un rail desdits convoyeurs ou transporteurs, par action d'un flux d'air sous pression sur lesdits produits, au niveau de leur guidage dans le rail.

A cet effet, les convoyeurs ou transporteurs aériens à air sont constitués sous forme d'un canal tubulaire délimitant à sa partie inférieure un rail de guidage des produits à transporter, ledit rail étant muni, d'une part, à intervalles réguliers, de buses d'éjection d'air sous pression en direction de transport des produits et, d'autre part, sous le rail, de moyens de maintien de la partie supérieure des produits dans ledit rail, le canal tubulaire étant alimenté en air sous pression par l'intermédiaire de conduites d'amenée correspondantes et étant pourvu, en outre, de moyens de contrôle sous forme de capteurs ou autres reliés à une unité centrale de commande par l'intermédiaire d'un câblage électrique.

Actuellement, ces conduites d'amenée d'air, ainsi que le câblage électrique sont disposés dans une goulotte, s'étendant au-dessus du canal tubulaire et fermée par un couvercle fixé par clippage. Pour l'alimentation en air du canal tubulaire, les conduites d'amenée d'air traversent à intervalles réguliers la goulotte et sont raccordées audit canal tubulaire. Il en est de même en ce qui concerne le câblage électrique, qui traverse la goulotte à proximité de chaque endroit nécessitant la mise en oeuvre d'un capteur ou analogue. Un tel convoyeur est décrit dans le document US 2004/084285 A1.

Ce mode de réalisation présente l'inconvénient d'être relativement rigide dans sa conception et dans sa mise en oeuvre, du fait qu'il nécessite une prise en compte préalable assez précise de la distribution des conduites d'air sous pression et du câblage électrique, impliquant des perçages préalables de la goulotte et la fermeture éventuelle des perçages redondants au moyen de bouchons.

En outre, toute nouvelle intervention de branchement supplémentaire ou de suppression d'une conduite ou d'un câblage entraîne automatiquement des intervention relativement lourdes de perçage des passages correspondant ou de fermeture des orifices libérés, ce qui a également un effet négatif sur l'esthétique de ces convoyeurs ou transporteurs à air.

Par ailleurs, dans ces goulottes connues, les conduites d'amenée d'air ainsi que les câblages électriques sont généralement disposés en vrac sans guidage particulier, de sorte que les opérateurs chargés de la maintenance sont confrontés à un problème de détection rapide des conduites et des câblages devant subir une intervention.

La présente invention a pour but de pallier ces inconvénients en proposant un convoyeur ou transporteur à air permettant de réaliser rapidement des modifications de branchement des conduites d'air sous pression ou des câblages électriques, sans nécessiter d'intervention avec un outillage spécifique, ni de moyen complémentaire de fermeture d'un orifice ou autre.

A cet effet, le convoyeur ou transporteur à air conforme à l'invention, qui est essentiellement constitué par un canal tubulaire délimitant à sa partie inférieure un rail de guidage et de propulsion des produits à transporter, ledit rail de guidage et de propulsion étant muni, d'une part, à intervalles réguliers, de buses d'éjection d'air sous pression en direction de transport des produits et, d'autre part, de part et d'autre de sa partie inférieure, de moyens de maintien de la partie supérieure des produits dans ledit rail de guidage et de propulsion, ledit canal tubulaire étant alimenté en air sous pression par l'intermédiaire de conduites d'air sous pression correspondantes et étant pourvu, en outre, de moyens de contrôle sous forme de capteurs ou autres reliés à une unité centrale de commande par l'intermédiaire d'un câblage électrique, est caractérisé en ce qu'il est pourvu, sur le canal tubulaire, à intervalles réguliers, de moyens de guidage et de maintien des conduites d'air sous pression et du câblage électrique et par des couvercles pouvant être encliquetés sur lesdits moyens de guidage et de maintien et recouvrant les arêtes correspondantes du canal tubulaire en ménageant un espace libre entre ces dernières et leurs bords.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en coupe transversale d'un convoyeur conforme à l'invention, et
la figure 2 est une vue en perspective du convoyeur suivant la figure 1.

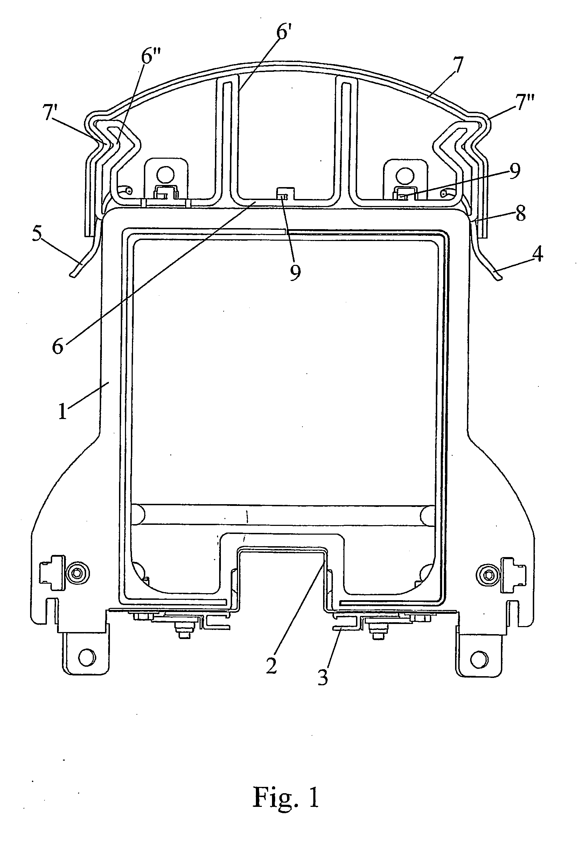

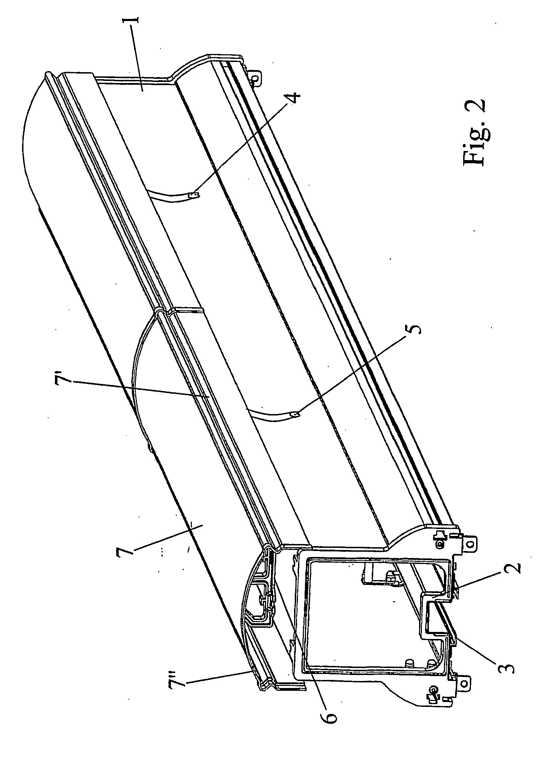

Les figures 1 et 2 des dessins annexés représentent, à titre d'exemple, un convoyeur ou transporteur à air, qui est essentiellement constitué par un canal tubulaire 1 délimitant à sa partie inférieure un rail de guidage et de propulsion 2 des produits à transporter, ledit rail de guidage et de propulsion 2 étant muni, d'une part, à intervalles réguliers, de buses, non représentées, d'éjection d'air sous pression, en direction de transport des produits et, d'autre part, de part et d'autre de sa partie inférieure, de moyens de maintien 3 de la partie supérieure des produits dans ledit rail de guidage et de propulsion 2, ledit canal tubulaire 1 étant alimenté en air sous pression par l'intermédiaire de conduites d'air sous pression 4 correspondantes et étant pourvu, en outre, de moyens de contrôle sous forme de capteurs ou autres (non représentés) reliés à une unité centrale de commande par l'intermédiaire d'un câblage électrique 5.

De manière connue, le canal tubulaire 1 est avantageusement réalisé par assemblage étanche de tronçons identiques. Par ailleurs, le fonctionnement du rail de guidage et de propulsion 2, ainsi que le maintien des produits à transporter par les moyens 3 ne sont pas décrits et relèvent des connaissances usuelles de l'homme du métier. En l'occurrence, le convoyeur ou transporteur à air selon l'invention est essentiellement destiné à acheminer des bouteilles vers une unité d'embouteillage par guidage desdites bouteilles au niveau de leur goulot, la propulsion par air sous pression étant effectuée également au niveau du goulot, au-dessus dudit guidage.

Conformément à l'invention, ce convoyeur ou transporteur à air est pourvu, sur le canal tubulaire 1, à intervalles réguliers, de moyens de guidage et de maintien 6 des conduites d'air sous pression 4 et du câblage électrique 5 et par des couvercles 7 pouvant être encliquetés sur lesdits moyens de guidage et de maintien 6 et recouvrant les arêtes correspondantes du canal tubulaire 1 en ménageant un espace libre 8 entre ces dernières et leurs bords. L'espace libre 8 délimité entre les arrêtes du canal tubulaire 1 et les bords de chaque couvercle 7, est destiné à permettre le passage des conduites d'air sous pression 4 et du câblage électrique 5. Ainsi, ces derniers peuvent déboucher hors de l'espace qui leur est affecté au-dessus du canal 1, à n'importe quel endroit en fonction des besoins liés à chaque installation.

Les moyens de guidage et de maintien 6 des conduites d'air sous pression 4 et du câblage électrique 5 se présentent avantageusement sous forme de portions profilées de largeur supérieure à la largeur du canal tubulaire 1, ces portions profilées étant fixées sur la partie supérieure dudit canal 1 par coopération avec des éléments d'encliquetage 9 s'étendant sur ladite partie supérieure du canal tubulaire 1 ou par serrage sur ladite partie supérieure au moyen de vis.

De préférence, les moyens de guidage et de maintien 6 des conduites d'air sous pression 4 et du câblage électrique 5 présentent transversalement au moins une subdivision 6' et leurs bords latéraux présentent des ailes verticales ayant une section transversale d'extrémité en forme de crochet ouvert 6" vers l'extérieur et destiné à coopérer avec au moins une nervure d'encliquetage correspondante 7' du bord latéral correspondant du couvercle 7.

Les moyens de guidage et de maintien 6 des conduites d'air sous pression 4 et du câblage électrique 5 ont avantageusement une largeur entre les bords extérieurs des crochets 6" prévus à l'extrémité des ailes verticales de leurs bords latéraux égales à la largeur intérieure des couvercles 7 et la différence de cette largeur avec celle du canal tubulaire 1 est au moins égale au double de la section d'une conduite d'air sous pression 4 ou d'un câblage électrique 5.

La subdivision 6' prévue entre les ailes verticales formant les bords latéraux des moyens de guidage et de maintien 6 des conduites d'air sous pression 4 et du câblage électrique 5 permit, d'une part, d'assurer un guidage et un maintien longitudinal des conduites d'air sous pression 4 et du câblage électrique 5 et, d'autre part, de garantir éventuellement un appui longitudinal pour le couvercle 7 correspondant, évitant ainsi une déformation du couvercle 7 suite à un appui intempestif par une charge et une tension de la partie supérieure du couvercle 7 entre ces nervures d'encliquetage 7', ce qui assure un maintien constant dudit couvercle 7 sur les moyens de guidage et de maintien 6.

Les différents couvercles 7 sont avantageusement pourvus d'extrémités coopérantes, c'est-à-dire présentent une extrémité munie d'un renflement 7" destiné à recouvrir, en position de service, l'extrémité adjacente du couvercle précédent, dont la section correspond à la section dudit couvercle 7 sur le reste de sa longueur. Ainsi, lors de la mise en place des couvercles 7, chaque nouveau couvercle recouvre par le renflement 7" de l'une de ces extrémités l'autre extrémité du couvercle précédent, assurant ainsi l'étanchéité au niveau de la jonction.

Les moyens de guidage et de maintien 6 des conduites d'air sous pression 4 et du câblage électrique 5, ainsi que les couvercles 7 peuvent être réalisés en tous matériaux rigides élastiquement déformables obtenus par moulage par extrusion ou autres. Les moyens de guidage et de maintien 6 peuvent, par exemple, être réalisés par débitage ultérieur d'un élément profilé extrudé, la largeur de ces moyens 6 pouvant être déterminée en fonction des dimensions du canal tubulaire 1 et des couvercles 7.

Par la prévision de moyens de guidage et de maintien 6, ainsi que de couvercles 7 surdimensionnés en largeur par rapport à la largeur du canal tubulaire 1 permet de guider facilement les conduites d'air sous pression 4 et le câblage électrique 5 à n'importe quel endroit hors de la goulotte ainsi formée, ce sans nécessiter un quelconque perçage des couvercles 7. Il en résulte que l'installateur dispose d'une grande liberté de manoeuvres, aucun point de passage d'une conduite d'air sous pression 4 et le câblage électrique 5 ne lui étant imposé.

Par ailleurs, grâce à cette possibilité de guidage des conduites d'air sous pression 4 et du câblage électrique 5 entre les bords des couvercles 7 et les parois du canal tubulaire 1, l'esthétique des convoyeurs ou transporteurs ainsi réalisés est également nettement amélioré, tout perçage de passage devenant inutile et, en corollaire, le bouchage de certains perçages inutiles n'étant plus nécessaire.

Enfin, du fait même de la suppression, lors de l'installation ou préalablement à l'installation de ces petites opération d'usinage que constituent les perçages, le prix de revient d'un tel convoyeur ou transporteur à air peut être réduit.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention qui est déterminée par les revendications annexées.

## Revendications

1. Convoyeur ou transporteur à air, essentiellement constitué par un canal tubulaire (1) délimitant à sa partie inférieure un rail de guidage et de propulsion (2) des produits à transporter, ledit rail de guidage et de propulsion (2) étant muni, d'une part, à intervalles réguliers, de buses d'éjection d'air sous pression, en direction de transport des produits et, d'autre part, de part et d'autre de sa partie inférieure, de moyens de maintien (3) de la partie supérieure des produits dans ledit rail de guidage et de propulsion (2), ledit canal tubulaire (1) étant alimenté en air sous pression par l'intermédiaire de conduites d'air sous pression (4) correspondantes et étant pourvu, en outre, de moyens de contrôle sous forme de capteurs ou autres reliés à une unité centrale de commande par l'intermédiaire d'un câblage électrique (5), **caractérisé en ce qu'**il est pourvu, sur le canal tubulaire (1), à intervalles réguliers, de moyens de guidage et de maintien (6) des conduites d'air sous pression (4) et du câblage électrique (5) et par des couvercles (7) pouvant être encliquetés sur lesdits moyens de guidage et de maintien (6) et recouvrant les arêtes correspondantes du canal tubulaire (1) en ménageant un espace libre (8) entre ces dernières et leurs bords.

2. Convoyeur ou transporteur à air suivant la revendication 1, **caractérisé en ce que** les moyens de guidage et de maintien (6) des conduites d'air sous pression (4) et du câblage électrique (5) se présentent sous forme de portions profilées de largeur supérieure à la largeur du canal tubulaire (1), ces portions profilées étant fixées sur la partie supérieure dudit canal (1) par coopération avec des éléments d'encliquetage (9) s'étendant sur ladite partie supérieure du canal tubulaire (1) ou par serrage sur ladite partie supérieure au moyen de vis.

3. Convoyeur ou transporteur à air, suivant l'une quelconque des revendications 1 et 2, **caractérisé en ce que** les moyens de guidage et de maintien (6) des conduites d'air sous pression (4) et du câblage électrique (5) présentent transversalement au moins une subdivision (6') et leurs bords latéraux présentent des ailes verticales ayant une section transversale d'extrémité en forme de crochet ouvert (6") vers l'extérieur et destiné à coopérer avec au moins une nervure d'encliquetage correspondante (7') du bord latéral correspondant du couvercle (7).

4. Convoyeur ou transporteur à air, suivant l'une quelconque des revendications 1 à 3, **caractérisé en ce que** les moyens de guidage et de maintien (6) des conduites d'air sous pression (4) et du câblage électrique (5) ont une largeur entre les bords extérieurs des crochets (6") prévus à l'extrémité des ailes verticales de leurs bords latéraux égales à la largeur intérieure des couvercles (7) et la différence de cette largeur avec celle du canal tubulaire (1) est au moins égale au double de la section d'une conduite d'air sous pression (4) ou d'un câblage électrique (5).

5. Convoyeur ou transporteur à air, suivant l'une quelconque des revendications 1, 3 et 4, **caractérisé en ce que** les couvercles (7) sont pourvus d'extrémités coopérantes, c'est-à-dire présentent une extrémité munie d'un renflement (7") destiné à recouvrir, en position de service, l'extrémité adjacente du couvercle précédent, dont la section correspond à la section dudit couvercle (7) sur le reste de sa longueur.

6. Convoyeur ou transporteur à air, suivant l'une quelconque des revendications 1 à 5, **caractérisé en ce que** les moyens de guidage et de maintien (6) des conduites d'air sous pression (4) et du câblage électrique (5), ainsi que les couvercles (7) sont réalisés en tous matériaux rigides élastiquement déformables obtenus par moulage par extrusion ou autres.

## Claims

1. A pneumatic conveyor or transporter, substantially consisting of a tubular canal (1) delimiting at its lower end a guiding and propulsion rail (2) of the products to be transported, said guiding and propulsion rail (2) being provided, on the one hand, at regular intervals, with compressed air ejection nozzles, in the transport direction of the products and, on the other hand, on either side of its lower part, means for securing (3) the top part of products in said guiding and propulsion rail (2), said tubular canal (1) being supplied with compressed air by means of corresponding compressed air ducts (4) and also being provided with control means in the form of sensors or the like which are connected to a central control unit by means of an electric cable (5), **characterised in that** on the tubular canal (1), at regular intervals, there are means for guiding and securing (6) compressed air ducts (4) and electric cable (5) and covers (7) able to be snapped onto said guiding and securing means (6) and covering the corresponding edges of the tubular canal (1) by providing a free space (8) between the latter and their edges.

2. The pneumatic conveyor or transporter according to claim 1, **characterised in that** the guiding and securing means (6) of the compressed air ducts (4) and the electric cable (5) are in the form of profiled portions that are wider than the width of the tubular canal (1), said profiled portions being fixed to the upper part of the said canal (1) by cooperation with the snap-on elements (9) extending over the said upper part of the tubular canal (1) or by securing onto said upper part by means of a screw.

3. The pneumatic conveyor or transporter according to any one of claims 1 and 2, **characterised in that** the guiding and securing means (6) of the compressed air ducts (4) and the electric cable (5) have transversally at least one subdivision (6') and their lateral edges have vertical wings with an end transverse cross section in the form of a hook (6") that is open towards the outside and is intended to cooperate with at least one corresponding snap-on rib (7') of the corresponding lateral edge of the cover (7).

4. The pneumatic conveyor or transporter according to any one of claims 1 to 3, **characterised in that** the guiding and securing means (6) of the compressed air ducts (4) and the electric cable (5) have a width between the outer edges of the hooks (6") provided at the end of vertical wings of their lateral edges equal to the interior width of the covers (7) and the difference of this width from that of the tubular canal (1) is at least equal to twice the cross section of a compressed air duct (4) or an electric cable (5).

5. The pneumatic conveyor or transporter according to any one of claims 1, 3 and 4, **characterised in that** the covers (7) are provided with cooperating ends, that is one end is provided with a bulge (7") designed to cover, in a position of use, the adjacent end of the preceding cover, the cross section of which corresponds to the cross section of said cover (7) over the rest of its length.

6. The pneumatic conveyor or transporter according to any one of claims 1 to 5, **characterised in that** the guiding and securing means (6) of the compressed air ducts (4) and of the electric cable (5) as well as the covers (7) are all made from elastically deformable rigid materials obtained by extrusion moulding or the like.

## Patentansprüche

1. Pneumatischer Förderer, der im Wesentlichen aus einem röhrenförmigen Kanal (1) gebildet ist, der in seinem unteren Teil eine Führungs- und Antriebsschiene (2) der zu transportierenden Produkte begrenzt, wobei die Führungs- und Antriebsschiene (2) einerseits in regelmäßigen Abständen mit Druckluftausstoßdüsen in Transportrichtung der Produkte und andererseits auf beiden Seiten ihres unteren Teils mit Mitteln zum Halten (3) des oberen Teils der Produkte in der Führungs- und Antriebsschiene (2) ausgestattet ist, wobei der röhrenförmige Kanal (1) mittels entsprechender Druckluftleitungen (4) mit Druckluft versorgt wird und außerdem mit Steuermitteln in Form von Sensoren oder in anderer Form versehen ist, die mittels einer elektrischen Verkabelung (5) mit einer zentralen Steuereinheit verbunden sind, **dadurch gekennzeichnet, dass** er auf dem röhrenförmigen Kanal (1) in regelmäßigen Abständen mit Führungs- und Haltemitteln (6) der Druckluftleitungen und der elektrischen Verkabelung (5) versehen ist, und **gekennzeichnet durch** Abdeckungen (7), die auf den Führungs- und Haltemitteln (6) eingerastet werden können und die entsprechenden Kanten des röhrenförmigen Kanals (1) überdecken, indem sie einen freien Raum (8) zwischen diesen letztgenannten und ihren Rändern schaffen.

2. Pneumatischer Förderer gemäß Anspruch 1, **dadurch gekennzeichnet, dass** die Führungs- und Haltemittel (6) der Druckluftleitungen (4) und der elektrischen Verkabelung (5) sich in Form profilierter Teilbereiche mit einer Breite größer als die Breite des röhrenförmigen Kanals (1) darstellen, wobei diese profilierten Teilbereiche auf dem oberen Teil des Kanals (1) durch Zusammenwirken mit Einrastelementen (9), die sich auf dem oberen Teil des röhrenförmigen Kanals (1) erstrecken, oder durch Festverschraubung auf dem oberen Teil befestigt sind.

3. Pneumatischer Förderer gemäß einem der Ansprüche 1 und 2, **dadurch gekennzeichnet, dass** die Führungs- und Haltemittel (6) der Druckluftleitungen (4) und der elektrischen Verkabelung (5) in Querrichtung wenigstens eine Unterteilung (6') aufweisen und ihre Seitenränder vertikale Flügel aufweisen, die einen Querschnitt am Ende in Form eines nach außen offenen Hakens (6") haben, und der dazu bestimmt ist, mit wenigstens einer entsprechenden Einrastrippe (7') des entsprechenden Seitenrands der Abdeckung (7) zusammenzuwirken.

4. Pneumatischer Förderer gemäß einem der Ansprüche 1 bis 3, **dadurch gekennzeichnet, dass** die Führungs- und Haltemittel (6) der Druckluftleitungen (4) und der elektrischen Verkabelung (5) eine Breite zwischen den Außenrändern der Haken (6"), die am Ende der vertikalen Flügel ihrer Seitenränder vorgesehen sind, gleich der Innenbreite der Abdeckung (7) haben, und der Unterschied dieser Breite zu der des röhrenförmigen Kanals (1) wenigstens gleich dem Doppelten des Querschnitts einer Druckluftleitung (4) oder einer elektrischen Verkabelung (5) ist.

5. Pneumatischer Förderer gemäß einem der Ansprüche 1, 3 und 4, **dadurch gekennzeichnet, dass** die Abdeckungen (7) mit zusammenwirkenden Enden versehen sind, das heißt, sie weisen ein Ende auf, das mit einer Ausbuchtung (7") ausgestattet ist, die dazu bestimmt ist, in Betriebsstellung das benachbarte Ende der vorhergehenden Abdeckung zu überdecken, deren Querschnitt dem Querschnitt der Abdeckung (7) auf dem Rest ihrer Länge entspricht.

6. Pneumatischer Förderer gemäß einem der Ansprüche 1 bis 5, **dadurch gekennzeichnet, dass** die Führungs- und Haltemittel (6) der Druckluftleitungen (4) und der elektrischen Verkabelung (5) sowie die Abdeckungen (7) aus beliebigen starren, elastisch verformbaren Materialien hergestellt sind, die durch Extrusionsformen oder anderweitig erhalten werden.
